# EUROPEAN PATENT APPLICATION

(11) **EP 3 340 003 A1**
(43) Date of publication of application: **27.06.2018**
(21) Application number: 16306795.2
(22) Date of filing: 22.12.2016
(51) Int. Cl.: G05D 23/19

(54) **TEMPERATURE SYNCHRONIZATION IN A SMART THERMAL MANAGEMENT SYSTEM**

(71) Applicant: Netatmo, 92100 Boulogne Billancourt (FR)
(72) Inventor: GABRIEL, Chadi, 92160 Antony (FR); POTTER, Frédéric, 92200 Neuilly-sur-Seine (FR); PAOLI, Romain, 92190 Meudon (FR)
(74) Representative: Nguyen-Van-Yen, Christian

(57) **Abstract**

The invention concerns a thermostatic radiator valve (TRV) the TRV comprising:
- a communication link to one or more other TRVs in the room (9);
- an input interface configured to allow a user to enter a defined temperature setpoint (T1) or acquire the defined temperature setpoint (T1) from the one or more other TRVs;
wherein the TRV is further configured to synchronize the defined temperature setpoint (T1) with the one or more other TRVs defined in a synchronization list.

## Description

### FIELD

The invention relates to the field of smart thermal management of household consumer devices and, in particular, the thermal control within a room or a house. The invention concerns a system and method for synchronizing temperature within a room. Although many of the features of this invention will be described in relation to a residential home environment, it is understood that they are generally applicable to many office and industrial building applications or the like as well.

### BACKGROUND

Over the last decades, many products have been introduced in order to control heat emitters within a room or a house. A traditional solution, still widespread, is to perform a room per room heat management inside a house. Each heat emitter is equipped with a valve that regulates the heat flux inside the heat emitter. The valve is either a mechanical valve or a thermostatic valve.

In the case of a mechanical valve, the user adjusts its position depending on the ambient heat he wishes inside the room. If the room comprises a plurality of heat emitters, the user has to adjust the position of each valve. This often leads to incorrect settings and additional energy costs.

A thermostatic valve, also called thermostatic radiator valve, is a self-regulating valve fitted to a hot water heating system radiator, to control the temperature of a room by changing the flow of hot water to the radiator. Such a valve gradually closes as the temperature of the surrounding area increases, limiting the amount of hot water entering the radiator.

A thermostatic valve allows a better thermal management within a room without a need of manually adapting the position of the valve. It is also possible to program various time schedules each corresponding to a temperature setpoint in the room. For example, the temperature setpoint of each valve may be set at 20°C from 7 am to 11 pm and at 18°C during the night, so as to save energy. To this end, a thermostat can be used to control operation of a central heating system, for example a boiler or more generally a heat generator, and regulate the temperature of one or more rooms by setting a temperature setpoint and monitoring the temperature within the home. If the room temperature falls under the temperature setpoint, the thermostat sends an appropriate signal to start the boiler.

Nevertheless, depending on the configuration of the house and the room positioning compared to each other, as well as the positioning of the thermostat itself, it may result in a non-adapted thermal regulation: a temperature setpoint may be reached in the vicinity of a heat emitter in a room but not in the vicinity of another heat emitter. Hence one of the heat emitters is activated whereas another is not. There is also a need for an adapted thermal regulation within a room. The temperature can be measured either in the thermostatic radiator valve or in the center of the room using an additional sensor or by estimating it. A temperature setpoint may be reached by one thermostatic valve in a room but not by another one in the same room.

It is known today to use, in combination with thermostatic valves, a variety of communication media to enable the thermal control within a room or a house, using for example power lines, cabled or wireless connections. The user may operate this thermal control with a connection via the Internet allowing a further degree of remote control. Such a connection can be realized thanks to a relay which can be driven by the user via a web application from a PC connected to the internet or directly via a smartphone application. Doing so, the user can remotely check the temperature of each room and decide to modify it on demand. For example, he or she can remotely modify the temperature setpoint in the living-room initially set at 18°C to a new setpoint at 20°C when leaving his or her office, so that the living-room temperature might be 20°C when he or she arrives at home.

When modifying the temperature setpoint of a heat emitter, this new temperature setpoint may be inconsistent with another temperature setpoint of another heat emitter in the same room. Therefore, there is a need for a better thermal control within a room taking room configuration and temperature setpoints into account.

### SUMMARY OF THE INVENTION

The invention aims to provide a system and method for grouping all valves within a room and synchronizing the operation of heat emitters, thus enabling a better thermal management within a room.

To this end, the subject of the invention is a thermostatic radiator valve (TRV), the TRV comprising a communication link configured to link the TRV to one or more other TRVs; an input interface configured to allow a user to enter a defined temperature setpoint or acquire the defined temperature setpoint from the one or more other TRVs; wherein the TRV is further configured to synchronize the defined temperature setpoint with the one or more other TRVs defined in a synchronization list.

According to the invention, the synchronization list may be stored in the TRV.

The TRV according to the invention may be further configured to send to the one or more other TRVs via its communication link a second temperature setpoint imposed to the one or more other TRVs so as to send the second temperature setpoint to the one or more other TRVs.

The TRV according to the invention may be further connected to an internet network and configured to receive a third temperature setpoint from an internet web application or a smartphone application.

The TRV according to the invention may be further configured to read a time schedule of temperature setpoints stored in the synchronization list and the time schedule of temperature setpoints is the same for the one or more other TRVs.

The TRV according to the invention may be further configured to detect a temperature drop and the TRV is further configured to stop a flow of heat transfer fluid from a thermal energy generator entering a heat exchanger to which it is connected and to communicate to the one or more TRVs the order to stop the flow of heat transfer fluid from the thermal energy generator entering the heat exchangers to which they are connected.

The TRV according to the invention may further comprise an aperture to adjust the flow of heat transfer fluid depending on a thermostat temperature setpoint received from a thermostat in the same room so as to avoid any conflict between the defined temperature setpoint of the TRV and the thermostat temperature setpoint.

The TRV according to the invention may further comprise an aperture to adjust the flow of heat transfer fluid corresponding to control parameters calculated by a control algorithm based on environmental parameters and a thermostat temperature setpoint.

The invention also relates to a server comprising a communication link configured to link one or more TRVs of a network; a memory having stored thereon computer code instructions configured to generate control commands of one or more TRVs connected to the network; a database of values of temporal sequences of environmental parameters captured from the one or more TRVs; the one or more TRVs comprising an input interface configured to allow a user to enter a defined temperature setpoint, or acquire the defined temperature setpoint, or acquire a measured temperature or detect opening of the TRV from the one or more TRVs and being further configured to synchronize the defined temperature setpoint with one or more other TRVs defined in a synchronization list; receive a temperature setpoint from a thermostat connected to the one or more TRVs; wherein the computer code instructions are based on a model comprising control parameters which are determined by a learning module receiving as input at least some of the values of temporal sequences of environmental parameters captured from the one or more TRV stored in the database.

The invention also relates to a method for temperature synchronizing between a plurality of thermostatic radiator valves (TRVs) configured to adjust a flow of heat transfer fluid from a thermal energy generator entering a heat exchanger based on a temperature setpoint, the TRVs comprising a communication link configured to link the one or more TRVs and an input interface configured to allow a user to enter a defined temperature setpoint or acquire the defined temperature setpoint from the one or more TRVs comprising the step of synchronizing the defined temperature setpoint to the one or more other TRVs defined in a synchronization list.

The technical effect of such a TRV is that it is interconnected to other TRVs and can be connected to the internet. The advantage is that it can be piloted remotely.

The TRV according to the invention may access its defined temperature setpoint(s) and also those of other TRVs.

Each new temperature setpoint imposed to one TRV is transferred to the other TRVs in the same list, possibly in the same room. From this, it follows that all the TRVs in the same room have the same temperature setpoint.

The TRV according to the invention can be connected to the internet via a relay and a new temperature setpoint can be transmitted to the TRV via a web application.

Moreover TRVs which are in the same list, possibly in the same room, have all the same time schedule and all TRVs in the same room consider the same temperature setpoint.

Furthermore, the TRV according to the invention communicates to the other TRVs in the same room the order to stop heat flow because the window is opened. All TRVs in the same room stop heating when a window opening is detected, thus leading to energy savings.

The thermostat may force the temperature setpoints of the TRVs in the same room if they differ from the thermostat temperature setpoint.

The TRVs are programmed in such a way that they are installed in the same room as the connected thermostat and are configured to work accordingly to enable an appropriate temperature balancing depending on environmental parameters.

The TRVs may be connected to a server, thus enabling the user to control the TRVs from a distance and, possibly, a third party service provider to gather data on their behavior to build/train a model and disseminate this to a population of subscribers/users.

The method according to the invention enables the TRVs to be interconnected and synchronized, so that they may be remotely piloted.

### BRIEF DESCRIPTION OF THE DRAWINGS

The accompanying drawings illustrate various non-limiting, example, innovative aspects in accordance with the present descriptions :
- Figure 1 schematically represents a thermostatic radiator valve according to the invention;
- Figure 2 schematically represents an embodiment of the thermostatic radiator valve for synchronizing the defined temperature setpoint with one or more other TRVs defined in a synchronization list according to the invention;
- Figure 3 schematically represents a variation of the previous embodiment of the thermostatic radiator valve for synchronizing the defined temperature setpoint with one or more other TRVs defined in a synchronization list according to the invention;
- Figure 4 schematically represents another embodiment of the thermostatic radiator valve for temperature synchronizing configured to send to the one or more TRVs a temperature setpoint imposed to the one or more other TRVs according to the invention;
- Figure 5 schematically represents another embodiment of the thermostatic radiator valve for temperature synchronizing configured to receive a temperature setpoint from an internet web application or a smartphone application according to the invention;
- Figure 6 schematically represents another embodiment of the thermostatic radiator valve for temperature synchronizing configured to store a time schedule of temperature setpoints according to the invention;
- Figure 7 schematically represents another embodiment of the thermostatic radiator valve for temperature synchronizing configured to detect a temperature drop due to aeration by window opening and stop the flow of hot medium coming from the heat generator according to the invention;
- Figure 8 schematically represents another embodiment of the thermostatic radiator valve for temperature synchronizing configured to adjust the flow of heating fluid depending on a thermostat temperature setpoint according to the invention;
- Figure 9 schematically represents another embodiment of the thermostatic radiator valve for temperature synchronizing configured to receive a new temperature setpoint corresponding to control parameters calculated by a control algorithm based on environmental parameters and a thermostat temperature setpoint according to the invention;
- Figure 10 represents a block diagram with possible combinations of steps of a method for temperature synchronizing according to the invention;
- Figure 11 represents a block diagram with other possible combinations of steps of a method for temperature synchronizing according to the invention.

For the sake of clarity, the same elements have the same references in the various figures.

The invention is described with self-regulating valves fitted to a hot water heating system radiator and a boiler but it may also be applied by analogy to any heating system comprising a central generator (from thermal, geothermal energy) and a plurality of radiators-with corresponding regulating devices.

Moreover the invention is described with a thermostatic radiator valve 21 in the field of heating but relates more generally to a thermostatic radiator valve TRV configured to adjust a flow of heat transfer fluid from a thermal energy generator entering a heat exchanger based on a temperature setpoint, the thermal energy generator and the heat exchanger configured to heat or cool a room with a room temperature, the TRV comprising a communication link configured to link the TRV to one or more other TRVs; an input interface configured to allow a user to enter a defined temperature setpoint or acquire the defined temperature setpoint from the one or more other TRVs; wherein the TRV is further configured to synchronize the defined temperature setpoint with the one or more other TRVs defined in a synchronization list.

In the following, the invention will be described with the heat transfer fluid being a heating fluid, the heat exchanger being a heat emitter and the thermal energy generator being a heat generator. But the heat transfer fluid can also be a cooling fluid, the heat exchanger a cooling emitter and the thermal energy generator a cooling generator.

### DETAILED DESCRIPTION

As previously mentioned, although many of the features of this invention are described in relation to a residential home environment, it is understood that they are generally applicable to many office and industrial building applications as well.

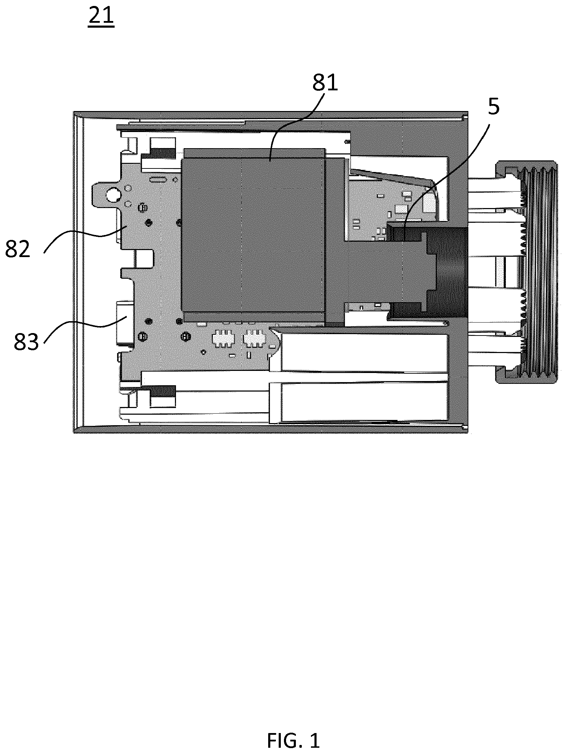

Figure 1 schematically represents a thermostatic radiator valve (TRV, 21) according to the invention. The TRV 21 comprises a motor 81, an electronic board 82. In a preferred embodiment, the TRV 21 may comprise one or more temperature sensor(s) 83. The motor 81 can be replaced by any oher system to reduce the fluid flow in the heat emitter.

The TRV 21 is a self-regulating valve fitted to a heating fluid conduit from a heat generator entering a heat emitter (or radiator) to which the TRV 21 is connected. The TRV 21 may include a memory to store some data such as a temperature setpoint. Depending on the surrounding temperature, for example measured by the TRV 21, and a temperature setpoint of the TRV 21, an electronic board 82 comprising a calculator may activate the motor 81 to mechanically adapt the aperture 5 of the TRV 21. Such a TRV 21 gradually closes as the temperature of the surrounding area increases, limiting the amount of heating fluid entering the heat emitter.

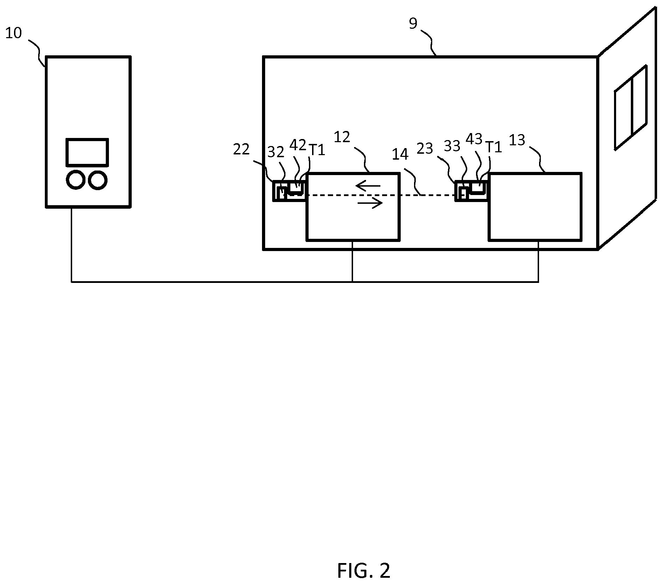

Figure 2 schematically represents an embodiment of the thermostatic radiator valve TRV for synchronizing the defined temperature setpoint with one or more other TRVs defined in a synchronization list according to the invention. The TRV 22 in a room 9 is configured to adjust a flow of heating fluid from a heat generator 10 entering a heat emitter 12 based on a temperature setpoint T1. The TRV 22 comprises a communication link 32 configured to link one or more other TRVs in the list, that may be situated in a same room 9, and an input interface configured to one or more of allow a user to enter a defined temperature setpoint T1 or acquire the defined temperature setpoint T1 from the one or more other TRVs, or measured temperature or opening of the TRV. According to the invention, the TRV 22 is further configured to synchronize the defined temperature setpoint T1 with the one or more other TRVs defined in the synchronization list. The TRVs in the room 9 may also use the same temperature in order to regulate the temperature setpoint T1.

In some embodiments, the TRVs in the synchronization list are situated in the same room as the synchronizing TRV. In some other embodiments, the TRVs in the synchronization list are a subgroup of the TRVs in a large room that has different orientations. In further embodiments, the TRVs in the synchronization list are situated in different rooms, but have a feature in common, e.g. to be allocated to members of a family who have different temperature preferences or to be situated on different sides of a building with different exposures, etc...

The synchronization list may be stored in the TRV. Each of the one or more TRVs may contain the synchronization list.

In the room 9 represented in Figure 2, there are two heat emitters 12, 13 to which two TRVs 22, 23 are respectively connected, for illustration purposes only. The TRVs 22, 23 are defined in a synchronization list to be in the same room 9. Therefore, since a defined temperature setpoint T1 was input to the TRV 22, the TRV 23 in the same room should have the same defined temperature setpoint T1. The TRV 22 transmits the defined temperature setpoint T1 to the TRV 23 via the communication link. The communication link 32 may be performed through a wired or radio connection 14 such as Zigbee, Wi-Fi, Bluetooth™. The synchronization of the defined temperature setpoint T1 works from the TRV 22 to the TRV 23 but it also works inversely from the TRV 23 to the TRV 22. In this example, there are two heat emitters 12, 13 and two associated TRVs 22, 23. It is obvious that the invention applies in the same way to more than two TRVs.

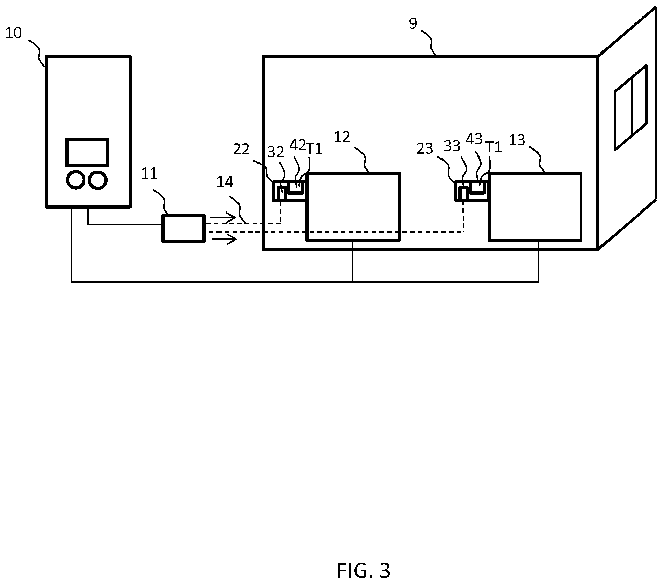

Figure 3 schematically represents another illustration of an embodiment of the thermostatic radiator valve for synchronizing the defined temperature setpoint with one or more other TRVs defined in a synchronization list according to the invention. In this example, the communication link 32 may include a relay 11 that may be connected to the TRVs through a wired or radio connection 14 (Zigbee, Wi-Fi, Bluetooth...). The relay 11 may be coupled to a gateway that enables the reception of external commands. The synchronization list may also be stored in the gateway.

In the following, the invention will be described with embodiments comprising a relay 11. Nevertheless, such a relay 11 is not compulsory to apply the invention to a plurality of TRVs. As explained above, the TRVs may synchronize with the one or more other TRVs defined in the synchronization list via their communication link, without any relay, using only a pair-to-pair communication mode.

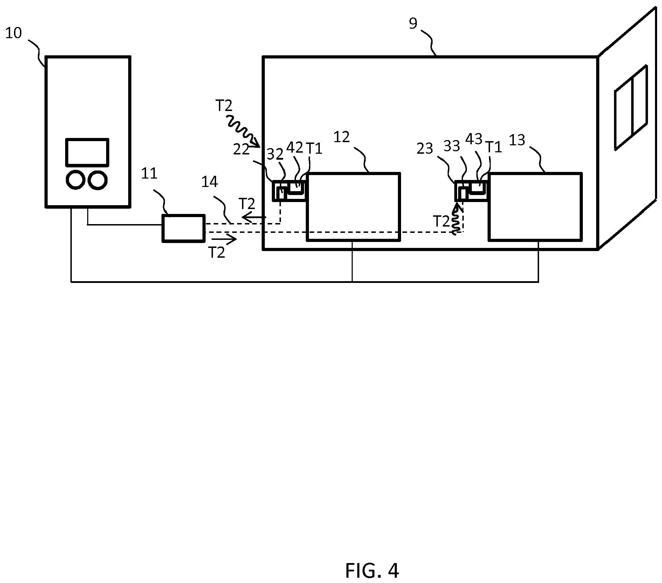

Figure 4 schematically represents another embodiment of the thermostatic radiator valve for temperature synchronizing configured to send to the one or more other TRVs a temperature setpoint imposed to the one or more other TRVs according to the invention. The TRV 22 is further configured to send to the one or more other TRVs 23 via its communication link 32 a second temperature setpoint T2 imposed to the one or more other TRVs so as to send the second temperature setpoint T2 to the one or more other TRVs. For example, a second temperature setpoint T2 is imposed to the TRV 22. The TRV 22 sends to the TRV 23, defined in the synchronization list, this second temperature setpoint T2. Therefore all new temperature setpoints imposed to one TRV is transmitted to the other TRV(s) in the list. It follows a uniformity of temperature setpoints between all TRVs in the synchronization list, notably when they are in the same room 9.

The synchronization of the defined temperature setpoint T2 operates from the TRV 22 to the TRV 23 but it also operates inversely from the TRV 23 to the TRV 22. In this example, there are two heat emitters 12, 13 and two associated TRVs 22, 23. It is obvious that the invention applies in the same way to more than two TRVs.

In the case of a relay 11, the TRV 22 may send the new temperature setpoint T2 to the network coordinator through the dedicated network 14. The network coordinator may then send the new temperature setpoint T2 to the other TRV(s) of the same room. The network coordinator has the role of concentrating and dispatching data from and to all TRVs.

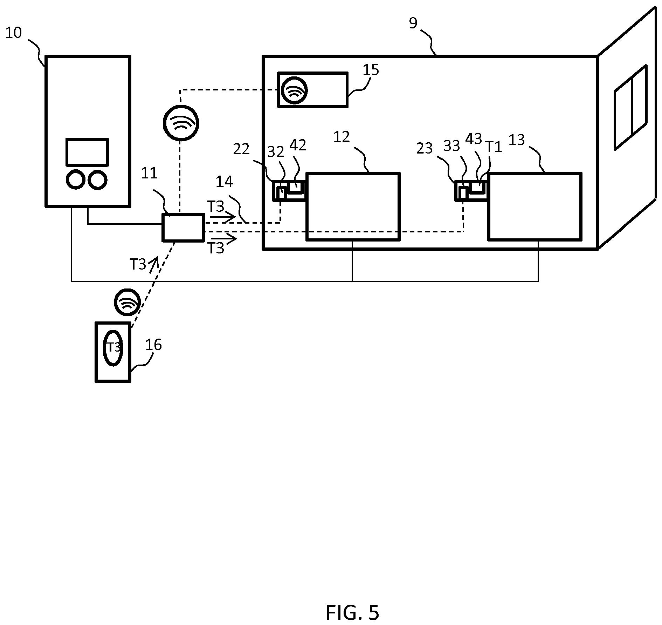

Figure 5 schematically represents another embodiment of the thermostatic radiator valve 22 for temperature synchronizing configured to receive a temperature setpoint T3 from an internet web application or a smartphone application according to the invention. The TRV 22 is further connected to an internet network 15 through a relay 11 and configured to receive a third temperature setpoint T3 from an internet web application or a smartphone application 16. The advantage of this feature is that each new defined temperature setpoint may be transmitted to one or more TRVs from outside.

The TRV 23 may also be connected to the internet network 15 through the same relay 11 and configured to receive the third temperature setpoint T3. But it is also possible not to connect all the TRVs of the room 9 to the internet network 15. In this case, the TRV connected to the internet network 15 would be the TRV receiving the third temperature setpoint and would send the third temperature setpoint T3 to the other TRVs in the same room 9, defined in the synchronization list, as previously explained.

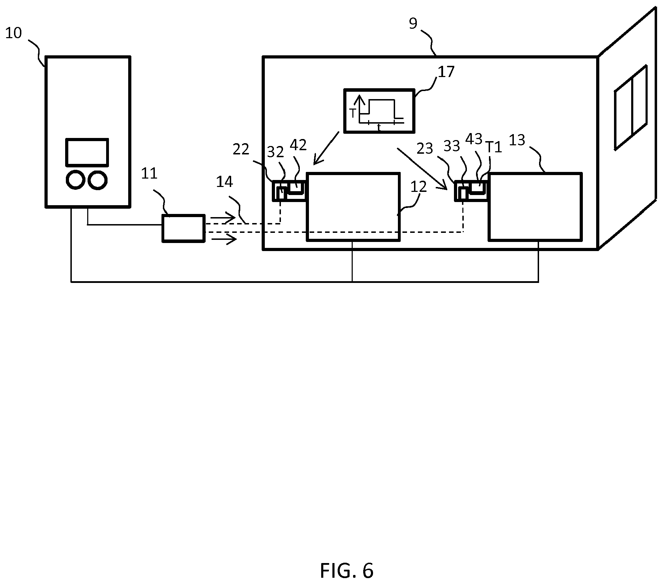

Figure 6 schematically represents another embodiment of the thermostatic radiator valve 22 for temperature synchronizing configured to store a time schedule 17 of temperature setpoints according to the invention. The TRV 22 is further configured to read a time schedule 17 of temperature setpoints stored in the synchronization list or in the TRV 22 and the time schedule 17 of temperature setpoints is the same for the one or more other TRVs. All TRVs in the same room have the same time schedule 17, so as to avoid any inconsistencies of the thermal management within a room.

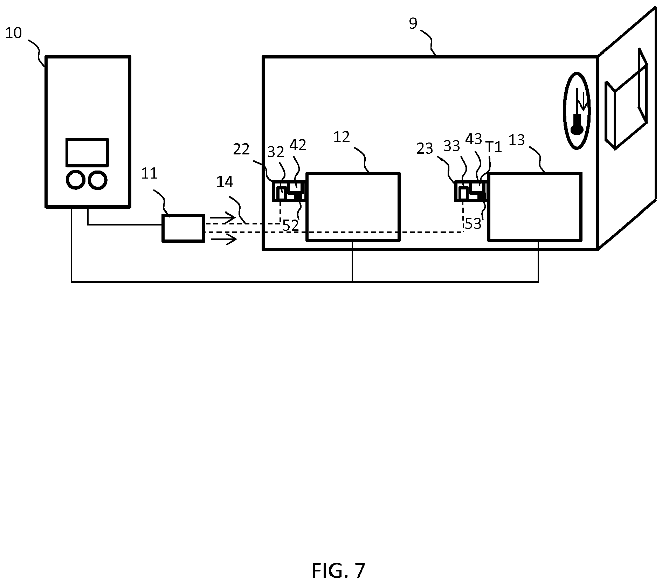

Figure 7 schematically represents another embodiment of the thermostatic radiator valve 22 for temperature synchronizing configured to detect a rapid temperature drop due to aeration by window opening and stop the flow of hot medium coming from the heat generator 10 according to the invention. The TRV 22 is further configured to detect a temperature drop due to aeration and the TRV 22 is configured to stop the flow of heating fluid from the heat generator 10 entering the heat emitter 12 to which it is connected and to communicate to the one or more TRVs 23 the order to stop the flow of heating fluid from the heat generator 10 entering the heat emitters 13 to which they are connected.

The TRV 22 may detect a temperature drop by various means. The TRV 22 may for instance comprise a temperature sensor 52 and measure the temperature in its vicinity so that it is able to detect a temperature drop, or a temperature sensor may be installed in the room and connected to the TRV 22 through a communication link. Also, the temperature used to regulate and detect the temperature drop can be an estimated temperature that is computed using a mathematic method and the temperature(s) measured within the TRV 22.

The TRV 22 communicates to the other TRV (in the example the TRV 23) in the same room 9 the order to stop heat flow because the window is opened. The order may take into account the state of the window or contain a time loop defining the duration of the stop. This duration can be previously defined by the user or be predetermined and set for example to 20 minutes. In this example, it would mean that 20 minutes after having detecting a temperature drop, the TRVs enables the heating fluid to enter the heat emitters again, according to their time schedule.

This feature avoids the heating up of the room when a window is opened. It enables the user not to care about the thermal regulation within the room when he/she wants to open the window. Indeed, he/she does not have to turn off the TRVs before opening the window and turn them on after closing the window.

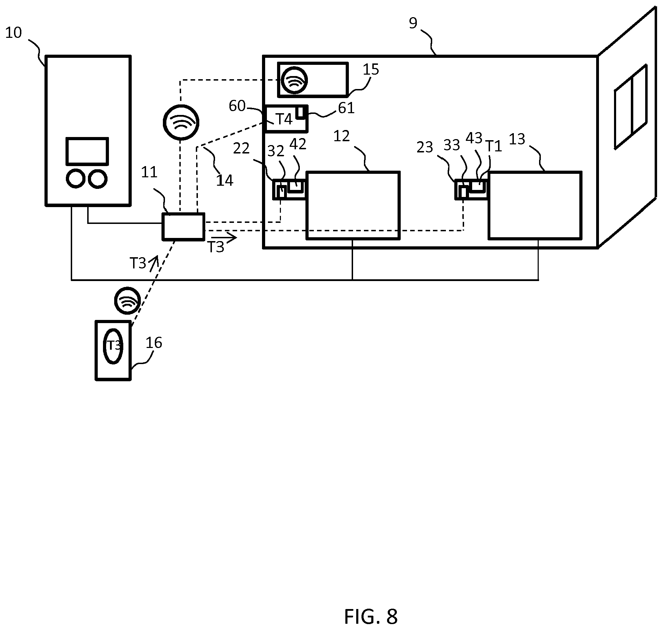

Figure 8 schematically represents another embodiment of the thermostatic radiator valve 22 for temperature synchronizing configured to adjust the flow of heating fluid depending on a thermostat temperature setpoint. The TRV comprises an aperture 5 to adjust the flow of heating fluid depending on a thermostat temperature setpoint T4 received from a thermostat 60 in the same room 9 so as to avoid any conflict between the defined temperature setpoint of the TRV 22, 23 and the thermostat temperature setpoint T4. This feature enables the thermostat 60 located in the same room 9 as the TRV 22 to control the temperature setpoints of the TRV 22 if the temperature setpoint of the TRV 22 is different from the thermostat temperature setpoint. In other words, the thermostat 60 controls the temperature setpoints of the TRVs located in the same room as the thermostat if their temperature setpoints differ from the thermostat temperature setpoint.

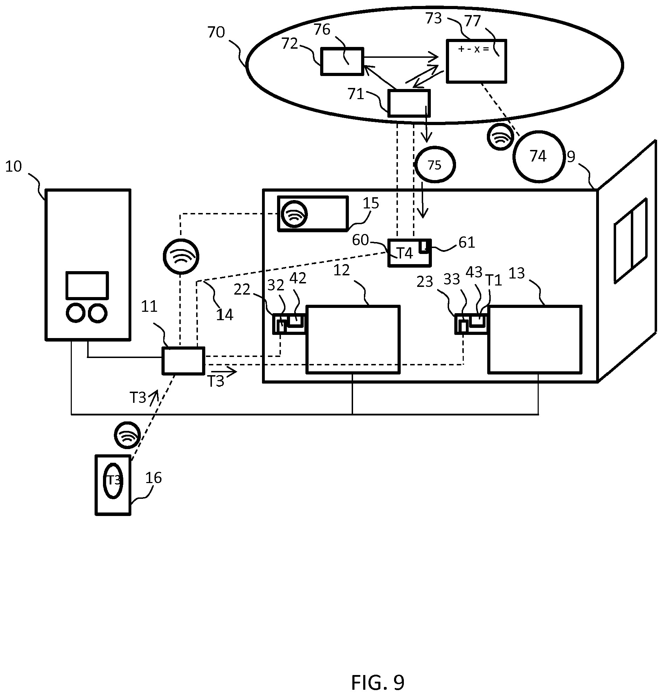

Figure 9 schematically represents another embodiment of the thermostatic radiator valve 22 for temperature synchronizing further comprising an aperture 5 to adjust the flow of heating fluid corresponding to control parameters 75 calculated by a control algorithm 73 based on environmental parameters 74 and a thermostat temperature setpoint T4 according to the invention.

The invention also concerns a server 70 comprising a communication link configured to link one or more TRVs of a network and a memory or an access to a memory having stored thereon computer code instructions 73 configured to generate control commands 75 of one or more TRVs connected to the network and a database of values of temporal sequences of environmental parameters captured from the one or more TRVs. The one or more TRVs comprise an input interface configured to allow a user to enter a defined temperature setpoint or acquire the defined temperature setpoint from the one or more TRVs and being further configured to synchronize the defined temperature setpoint with one or more TRVs defined in a synchronization list; receive a temperature setpoint from a thermostat 60 connected to the one or more TRVs. According to the invention, the computer code instructions are based on a model comprising control parameters which are determined by a learning module receiving as input at least some of the values of temporal sequences of environmental parameters 75 captured from the one or more TRV stored in the database.

The TRVs 22, 23 may capture and store information like ambient temperatures and temperature setpoints. The thermostat 60 may send this data to the server 70. Note that the expression "server" may designate one or more virtual machines that are executed on a plurality of physical machines located localy and/or anywhere "in the cloud".

The server 70 may comprise a communication link 71 configured to receive and send data from/to the thermostat 60 through the internet network 15, a memory 72 configured to store data, a control algorithm 73 configured to perform calculations. The room 9 is in an environment with real environmental parameters 74 and a thermostat temperature setpoint T4 is being set in the room. The control algorithm 73 is configured to receive through the internet network 15 the real environmental parameters 74, calculate control parameters 75 based on the environmental parameters 74, the measured temperature of the thermostat and the TRV and the thermostat temperature setpoint T4, send the control parameters 75 to the thermostat 60 corresponding to a new temperature setpoint to impose to the plurality of TRVs 22, 23 so as to regulate the room temperature 9 to the thermostat temperature setpoint T4.

Furthermore, the memory 72 of the server 70 may be configured to store a history 76 of the real environmental parameters and the control parameters calculated by the control algorithm in relation with the real environmental parameters. The control algorithm 73 may comprise a learning module 77 configured to adapt the calculation of the control parameters by taking into account the history 76.

As an example, the control algorithm 73 may include a thermal model taking into account the heat capacity C of the room and the heat transfert coefficient K between the inside and the outside of the room for a plurality of outdoor temperatures. Other elements could be added or removed from the model, provided that the model allows controlling an indoor temperature of the room, based at least on predictions of a setpoint temperature, outdoor temperature, and eventually other parameters like the percentage of aperture of the TRV.

Each TRV has for example a different heat capacity, heat transfer coefficients of the walls, etc... Thus, the parameters of a model prepared for a room cannot be used directly for another room. There is thus the need to tailor the values of the parameters of a model for an a priori unknown room, in order to get the best temperature control possible.

All or a subset of the values of the parameters can be calculated based on the characteristics of the room, for example its size, the size of the windows. For example, a heat transfer coefficient K can be calculated for a wall based on the surface, the material and the width of the wall. Similarly, a heat capacity C of the room can be calculated based on the volume of the room, and predicted radiation coefficients R based on a surface of a window. Textures or materials inside the room can also be used to calculate radiation coefficients R. Indeed, the amount of heat absorbed by radiations by the room may depend on how the solar radiations are absorbed by the surfaces inside the room.

The all or a subset of the values of the parameters may be calculated by a learning module during a training phase. This solution presents the advantage of allowing a user to put a device for controlling the temperature of the room, as a temperature sensor of the TRV, and the model that best suits the room is automatically calculated, without needing to perform any measurement of the room.

The parameters of the model can be calculated by the server 70. The server is then configured to receive at least measurements of indoor temperature of the room from the temperature sensors of the TRVs or any other temperature sensor inside the room, and, optionaly, values of the outdoor temperature of the room. The server is then configured to calculate parameters of the room model based on received data, and send the parameters to control the temperature of the room. The TRV of the room then receives relevant values of parameters of the model to control the indoor temperature of the room. This solution has the advantage of letting a server with a lot of computing power perform complex calculations of the parameters of the model. Transfer of data from the TRVs/thermostat through the relay may be executed at different frequencies. The frequencies may vary over time, since it may be necessary for the server to gather more data when put in service than in regular on-going service. The data may need to be cleaned or preprocessed prior to being input in the learning module of the server, so as to filter abnormal or erroneous data as well as outliers that may pollute the learning phase. Different learning algorithms may be used for this calibration phase. As example, a possibility is to compare the house to an electronic circuit RC with C being the heat capacity and R an image of the isolation and study afterward the charge and discharge of the capacity to compute R and C.

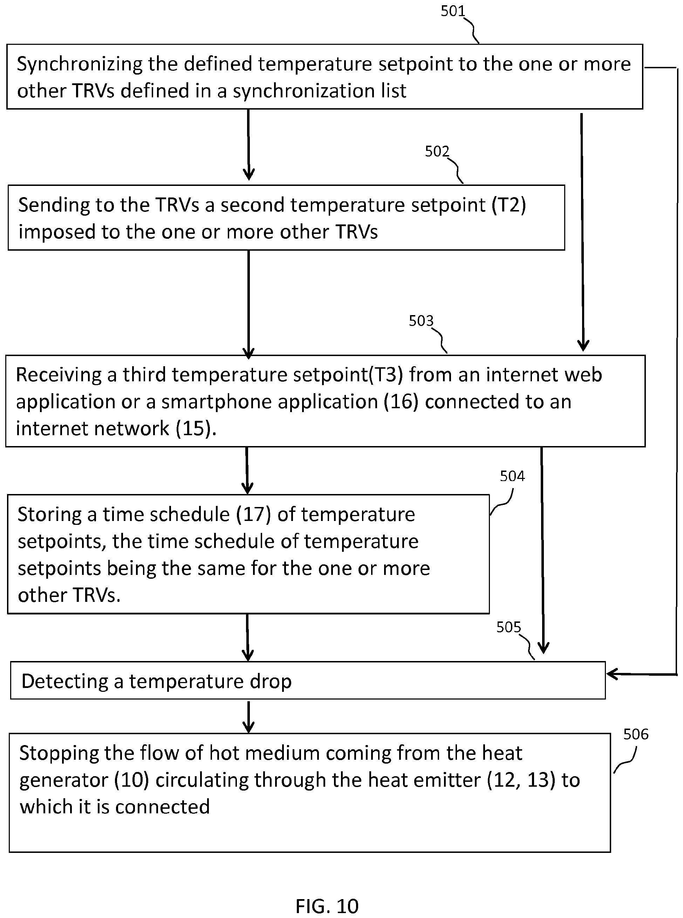

Figure 10 represents a block diagram with possible combinations of steps of a method for temperature synchronizing according to the invention. The method comprises the step 501 of synchronizing the defined temperature setpoint T1 to the one or more other TRVs 22, 23 defined in a synchronization list.

The method may comprise the step 502 of sending to the TRVs a second temperature setpoint T2 imposed to the one or more other TRVs.

The method may comprise the step 503 of receiving a third temperature setpoint T3 from an internet web application possibly commanded from a smartphone 16 connected to an internet network 15.

The method may comprise the step 504 of storing a time schedule 17 of temperature setpoints, the time schedule of temperature setpoints being the same for the one or more other TRVs.

Moreover, the method may comprise the step 505 of detecting a temperature drop and the step 506 of stopping the flow of hot medium coming from the heat generator 10 circulating through the heat emitter 12, 13 to which it is connected.

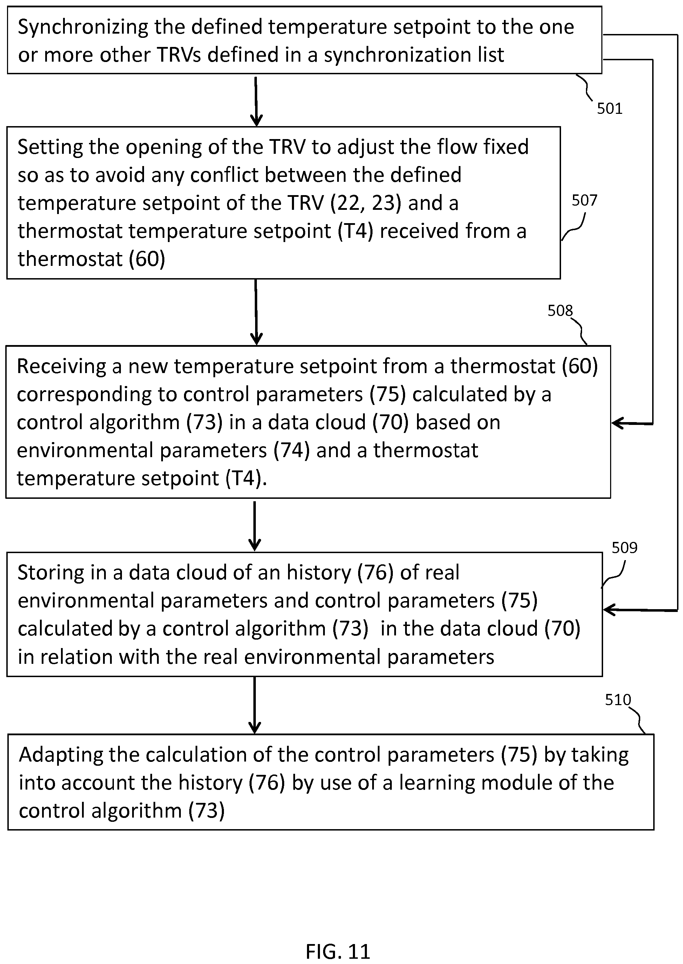

Figure 11 represents a block diagram with others possible combinations of steps of a method for temperature synchronizing according to the invention.

The method may further comprise the step 507 of setting the opening of the TRV to adjust the flow fixed so as to avoid any conflict between the defined temperature setpoint of the TRV 22, 23 and a thermostat temperature setpoint T4 received from a thermostat 60.

The method according to the invention may comprise the step 508 of receiving a new temperature setpoint from a thermostat 60 corresponding to control parameters 75 calculated by a control algorithm 73 in a server 70 based on environmental parameters 74 and a thermostat temperature setpoint T4.

Furthermore, the method may comprise the step 509 of storing in a memory a history 76 of real environmental parameters and control parameters 75 calculated by a control algorithm 73 in the server 70 in relation with the real environmental parameters.

Optionnally, according to the invention, either as a by-product of the execution of the control algorithm or in a manner that is not performed at the time of executing the control algorithm, there may be a step 510 of adapting the calculation of the control parameters 75 by taking into account the history 76 by use of a learning module of the control algorithm 73.

The examples disclosed in this specification are only illustrative of some embodiments of the invention. They do not in any way limit the scope of said invention which is defined by the appended claims.

## Claims

1. A thermostatic radiator valve (TRV), the TRV comprising:
- a communication link configured to link the TRV to one or more other TRVs;
- an input interface configured to allow a user to enter a defined temperature setpoint (T1) or acquire the defined temperature setpoint (T1) from the one or more other TRVs;
wherein the TRV is further configured to synchronize the defined temperature setpoint (T1) with the one or more other TRVs defined in a synchronization list.

2. The TRV of claim 1, wherein the synchronization list is stored in the TRV.

3. The TRV of claim 1 or 2, further configured to send to the one or more other TRVs via its communication link (32, 33) a second temperature setpoint (T2) imposed to the one or more other TRVs so as to send the second temperature setpoint (T2) to the one or more other TRVs.

4. The TRV of one claims 1 to 3, further connected to an internet network (15) and configured to receive a third temperature setpoint (T3) from an internet web application or a smartphone application (16).

5. The TRV of one of claims 1 to 4, further configured to read a time schedule (17) of temperature setpoints stored in the synchronization list and the time schedule (17) of temperature setpoints is the same for the one or more other TRVs.

6. The TRV of one of claims 1 to 5, further configured to detect a temperature drop and the TRV (22, 23) is further configured to stop a flow of heat transfer fluid from a thermal energy generator (10) entering a heat exchanger (12, 13) to which it is connected and to communicate to the one or more TRVs the order to stop the flow of heat transfer fluid from the thermal energy generator (10) entering the heat exchangers to which they are connected.

7. The TRV of one of claims 1 to 6, further comprising an aperture (5) to adjust the flow of heat transfer fluid depending on a thermostat temperature setpoint (T4) received from a thermostat (60) in the same room (9) so as to avoid any conflict between the defined temperature setpoint of the TRV (22, 23) and the thermostat temperature setpoint (T4).

8. The TRV of one of claims 1 to 7, further comprising an aperture (5) to adjust the flow of heat transfer fluid corresponding to control parameters (75) calculated by a control algorithm (73) based on environmental parameters (74) and a thermostat temperature setpoint (T4).

9. A server comprising :
- a communication link configured to link one or more TRVs of a network;
- a memory having stored thereon:
o computer code instructions configured to generate control commands of one or more TRVs connected to the network;
o a database of values of temporal sequences of environmental parameters captured from the one or more TRVs;
the one or more TRVs comprising an input interface configured to allow a user to enter a defined temperature setpoint, or acquire the defined temperature setpoint, or acquire a measured temperature or detect opening of the TRV from the one or more TRVs and being further configured to:
- synchronize the defined temperature setpoint with one or more other TRVs defined in a synchronization list;
- receive a temperature setpoint from a thermostat (60) connected to the one or more TRVs;
wherein the computer code instructions are based on a model comprising control parameters which are determined by a learning module receiving as input at least some of the values of temporal sequences of environmental parameters captured from the one or more TRV stored in the database.

10. A method for temperature synchronizing between a plurality of thermostatic radiator valves (TRVs) configured to adjust a flow of heat transfer fluid from a thermal energy generator (10) entering a heat exchanger (12, 13) based on a temperature setpoint, the TRVs comprising a communication link configured to link the one or more TRVs and an input interface configured to allow a user to enter a defined temperature setpoint or acquire the defined temperature setpoint from the one or more TRVs comprising the step (501) of synchronizing the defined temperature setpoint to the one or more other TRVs defined in a synchronization list.
